# EUROPÄISCHE PATENTANMELDUNG

(11) **EP 0 726 539 A2**
(43) Veröffentlichungstag der Anmeldung: **14.08.1996**
(21) Anmeldenummer: 96250007.0
(22) Anmeldetag: 15.01.1996
(51) Int. Cl.: G06K 1/12, G06K 19/06, G06K 7/10

(54) **Verfahren zur Einzelstückverfolgung**

(30) Priorität: 10.02.1995 DE 19505513
(71) Anmelder: MANNESMANN Aktiengesellschaft, D-40213 Düsseldorf (DE)
(72) Erfinder: Schoenen, Manfried, Dipl.-Ing., D-40822 Mettmann (DE); Unger, Alfred, D-45966 Gladbeck (DE)
(74) Vertreter: Henze, Lothar

(57) **Zusammenfassung**

Die Erfindung betrifft ein Verfahren zur Einzelstückverfolgung, insbesondere Rohr, bei dem das einzelne Stück Träger einer unverwechselbaren Identifizierung ist und beim Durchlaufen aller vorgeschriebenen Fertigungs- und Prüfschritte bei den einzelnen Stationen die Identifizierung des individuellen Stückes aufgenommen und in eine zentrale Erfassungs- und Auswerteeinheit eingegeben und die erfaßte Identifizierung mit der Vielzahl aller vorab eingegebenen Identifizierungen abgeglichen und der durchgeführte Fertigungs- oder Prüfschritt der erfaßten Identifizierung zugeordnet wird.

Erfindungsgemäß wird zu Beginn der Fertigung auf jedes Stück unmittelbar ein über den gesamten Querumfang sich erstreckender Barcode versatzfrei aufgegeben, der im Zulaufbereich zu den einzelnen Fertigungs- bzw. Prüfstationen während des Weitertransportes unabhängig von der Transportrichtung automatisch als Videobild abgelesen und der Code in eine Zifferfolge umgewandelt und anschließend die die Identifizierung kennzeichnende Zifferfolge in bekannter Weise für das Verfolgungssystem verwendet wird.

## Beschreibung

Die Erfindung betrifft ein Verfahren zur Einzelstückverfolgung, insbesondere Rohr gemäß dem Gattungsbegriff des Hauptanspruches.

Im Zuge der Einführung eines Qualitätssicherungssystems, beispielsweise entsprechend ISO 9000 auch im Bereich der Halbzeug- und Vorproduktenherstellung ist schwergewichtig das Problem der Rückverfolgbarkeit, d.h. wann ist wo was wie gefertigt oder geprüft worden, in den Vordergrund gerückt. Untrennbar mit diesem Problem verbunden ist die unverwechselbare Identifizierung jedes einzelnen Stückes beim Durchlaufen aller vorgegebenen Fertigungs- und Prüfschritte. Vor allem in Bereichen mit einer typischen Massenfertigung wie beispielsweise ein Rohrwerk, wo hunderte bis tausende von einzelnen Rohren gleichzeitig bewegt, bearbeitet und geprüft werden, ist die Einzelstückverfolgung zu einem zentralen Thema geworden.

Nun sind in der Vergangenheit auch schon verschiedene Verfahren zur Identifizierung jedes einzelnen Stückes im Sinne einer Verfolgung angewandt worden, die aber den heutigen Anforderungen meistenteils nicht gerecht werden. Beispielsweise wird in vielen Anwendungsfällen als kleinste Identeinheit das Walz- oder Fertigungslos gewählt, wobei üblicherweise die gleiche Schmelze und die gleiche Endabmessung ein Los bildet. Die Anzahl der Stücke innerhalb des Loses wird eingangs ermittelt entweder von Hand oder über ein Zählgerät und der Ausfall eines oder mehrerer Stücke während des Durchlaufes an den einzelnen Stationen festgehalten. Bei größeren Losen wird das Los noch in Bunde unterteilt, wobei jedes Bund eine fortlaufende Nummer erhielt. Identifiziert wird das einzelne Stück über das meistens mit Drähten zusammengehaltene Bund bzw.über das Los, in dem beispielsweise eine Identkarte mit einem gebogenen Draht in eines der Rohre gesteckt wird. Beim Transport dieser Bunde quer durch mehrere Hallenschiffe kann es nicht ausbleiben, daß eine Identkarte verlorengeht bzw. beim Öffnen der Bunde verlegt und versehentlich in ein falsches Bund gesteckt wird. Andere Systeme arbeiten mit von Hand oder maschinell aufgepinselten oder eingeschlagenen Identnummern, aufgeklebten oder aufgestanzten Etiketten oder mit Laser eingravierten Identifizierungen. Alle diese bekannten Verfahren sind nachteilig, da die aufgebrachte Identifizierung entweder nicht lageunabhängig ablesbar ist, z. B. wenn das Etikett auf der Unterseite des Rohres sich befindet oder die Identnummer nicht beliebig vorwärts oder rückwärts erfaßbar ist oder die aufgebrachte Identifizierung bei einer Prüfung stört, z. B. bei einer US-Prüfung zu Fehlanzeigen führt oder die Identnummer bei zu hoher Transportgeschwindigkeit nicht mehr ablesbar ist oder die Zuverlässigkeit der Erfassung zu wünschen übrig läßt oder die Haltbarkeit der aufgebrachten Identifizierung während des Durchlaufes durch alle vorgeschriebenen Fertigungs- und Prüfschritte nicht gegeben ist.
Aus der DE 30 19 403 A1 ist ein Verfahren bekannt, bei dem das Werkstück mit einer maschinenlesbaren codierten Markierung auf einer definierten Werkstückoberfläche versehen wird. Vorzugsweise wird ein Barcode in Form eines verschachtelten 2 aus 5 Code verwendet, der an einer geeigneten Stelle auf dem Werkstück als Schriftfeld aufgebracht wird. Die Auftragung des Barcode erfolgt in der Weise, daß die einzelnen Striche durch Abtragen eines definierten Oberflächenbereiches kenntlich gemacht werden. Mittels eines geeigneten Detektors wird an den verschiedenen Fertigungs- und Prüfstationen der Barcode abgelesen, decodiert und beispielsweise zur Steuerung des Fertigungsverfahrens oder zur Zusammenstellung von Stammdaten verwendet. Nachteilig bei diesem Verfahren ist, daß durch die Festlegung des Barcode an einer bestimmten Stelle des Werkstückes das Ablesen des Barcodes nur bei einer geeigneten Positionierung von Werkstück zu Detektor erfolgen kann. Weiterhin ist die abtragende Strichmarkierung für viele Anwendungsfälle nicht gestattet, da oftmals als Abnahmekriterium die äußere Oberfläche frei von Ungänzen sein soll. Weiterhin würden bei einigen Anwendungsfällen diese quasi Oberflächenungänzen zu Prüfausfällen führen.

Die Anordnung eines einfachen Identifikationsfeldes auf einem rohrförmigen Körper ist in der DE 3403937 A1 offenbart. Bei diesem Verfahren werden vorzugsweise auf Getränkedosen aus Aluminium am oberen und unteren Mantelrand je ein aus zwei dunklen und zwei hellen, um den gesamten Umfang sich erstreckenden Strichen bestehendes Identifikationsfeld aufgebracht. Diese einfache Identifizierung reicht nur für eine ja/nein-Aussage aus, z.B. rycyclefähig oder nicht. Da das Dekorfeld der Dose in das Identifikationsfeld hineinragen kann, sind zwei weit auseinanderliegende Identfelder erforderlich, um eine sichere Erfassung zu gewährleisten. Darüber hinaus sind zwei im Umfang versetzt angeordnete Lesegeräte erforderlich, um auch bei teilweiser Beschädigung des Identfeldes eine Erfassung sicherzustellen. Nachteilig bei diesem Verfahren ist die eingeschränkte Nutzung des Identfeldes nur für eine Kenngröße und der relativ hohe apparative Aufwand zur sicheren Erfassung des Identfeldes.
Aufgabe der Erfindung ist es, ein Verfahren zur Einzelstückverfolgung, insbesondere auch warmgefertigter Rohre anzugeben, bei dem ein Barcode als unverwechselbare Identifizierung verwendet wird und der auf einem beliebigen Rohrabschnitt aufgebrachte Barcode auch bei Längstransport und Drehung des Rohres sicher erfaßtwerden kann und nicht zu einer Beeinträchtigung bei der Prüfung und/oder Nichterfüllung der Abnahmevorschriften führt.
Diese Aufgabe wird mit den im kennzeichnenden Teil des Anspruches 1 angegebenen Merkmalen gelöst. Vorteilhafte Weiterbildungen sind Bestandteil von Unteransprüchen.
Im Unterschied zum bekannten Stand der Technik wird ein an sich bekannter Barcode auf jedes einzelne Stück unmittelbar aufgegeben und zwar mit einer Erstreckung über den gesamten Querumfang. Damit ist das Ablesen des Barcode unabhängig von der Umfangslage des Rohres. Außerdem wird durch die Erfassung des Barcode als Videobild sichergestellt, daß die Erfassung unabhängig von der Transportrichtung ist. Es ist deshalb unerheblich, ob das mit einem Barcode versehene Rohr von rechts oder von links in den Erfassungsbereich transportiert wird. Damit der Barcode in seiner axialen Erstreckung nicht zu lang wird, z. B. weniger als 500 mm, wird ein 2 aus 5 Code verwendet, der vorzugsweises aus sechs Ziffern besteht. Damit können Stücke beginnend bei 1 bis 999 999 unverwechselbar identifiziert werden. Das ist für den Anwendungsfall Rohrwerk in den meisten Fällen ausreichend. Selbstverständlich könnte auch beispielsweise eine achtstellige Ziffer aufgegeben werden, wenn man die Farbringe entsprechend schmal macht. Je nach Oberflächengüte der zu identifizierenden Stücke darf der Farbstrich aber nicht zu schmal gewählt werden, da mit Ausfransungen zu rechnen ist, die das Auswertesystem irgenwann nicht mehr sicher als zwei getrennte Farbstriche unterscheiden kann. Für den bevorzugten Anwendungsbereich von warmgefertigten Rohren hat sich eine Farbringbreite von 5 mm als günstig erwiesen. Die Untergrenze liegt etwa bei 3,5 mm. Wesentlich für die Erfindung ist, daß nicht der Code selbst sondern die Lücken dazwischen aufgespritzt werden und der verbleibende dunkle Teil der Rohroberfläche der eigentliche Code ist. Jede Ziffer besteht aus einer Abfolge von 2 breiten und 3 schmalen Balken. Das Verhältnis von breit zu schmal ist vorzugsweise 3, damit die eindeutige Unterscheidung gewährleistet ist. Als Farbe wird eine weißpigmentierte Signierfarbe verwendet, die einen ausreichenden Kontrast zur dunklen Rohroberfläche bietet. Bei einer sechssteiligen Ziffernfolge müssen insgesamt 30 unterschiedlich breite Einzelinformationen aufgegeben werden. Dies ergibt eine Lückenanzahl von 31. Theoretisch könnte mit 31 angesteuerten Spritzpistolen diese geforderte Lückenanzahl gleichzeitig aufgespritzt werden. Da aber die Spritzpistolen einen endlichen Abstand voneinander haben müssen, damit sich die Spritzkegel nicht vermischen und außerdem immer mit Ausfällen zu rechnen ist, hat es sich als vorteilhaft erwiesen, die Anzahl der erforderlichen Spritzpistolen auf 15 zu begrenzen. Durch zweimaliges horizontales Verschieben der Signiersektion in der gleichen Richtung werden die erforderlichen Farbringe (Lücken) aufgebracht. Beispielsweise werden bei der ersten Umdrehung des Rohres 9 Striche und bei der zweiten und dritten Rohrumdrehung je 11 Striche aufgetragen. Damit die Striche umfangsmäßig sauber ineinander übergehen, wird das Rohr mittels einer Anlaufrolle axial fixiert. Somit entstehen keine Überlappungen der Signierung, die das Auswertesystem möglicherweise nicht unterscheiden kann. Der Vorteil der vorgeschlagenen Signiertechnik ist auch darin zu sehen, daß die im Laufe der Fertigung unausbleibliche Teilbeschädigung eines oder mehrerer Farbringe auf dem Umfang keine Auswirkungen auf die zuverlässige Identifizierung des Barcode hat. Da der einmal aufgespritzte Barcode auch von einer manuell bedienbaren Videokamera ablesbar ist, kann nach Auslieferung der Rohre der Kunde die unverwechselbare Identifizierung für seine Lagerhaltung und Logistik nutzen.

In der Zeichnung wird anhand einiger Prinzipbilder das erfindungsgemäße Verfahren näher erläutert.

Es zeigen:
Figur 1 das Signierschema der erfindungsgemäßen Barcode-Signieranlage
Figur 2 die Barcode-Signieranlage
Figur 3 das Erfassungssystem des aufgespritzten Barcode

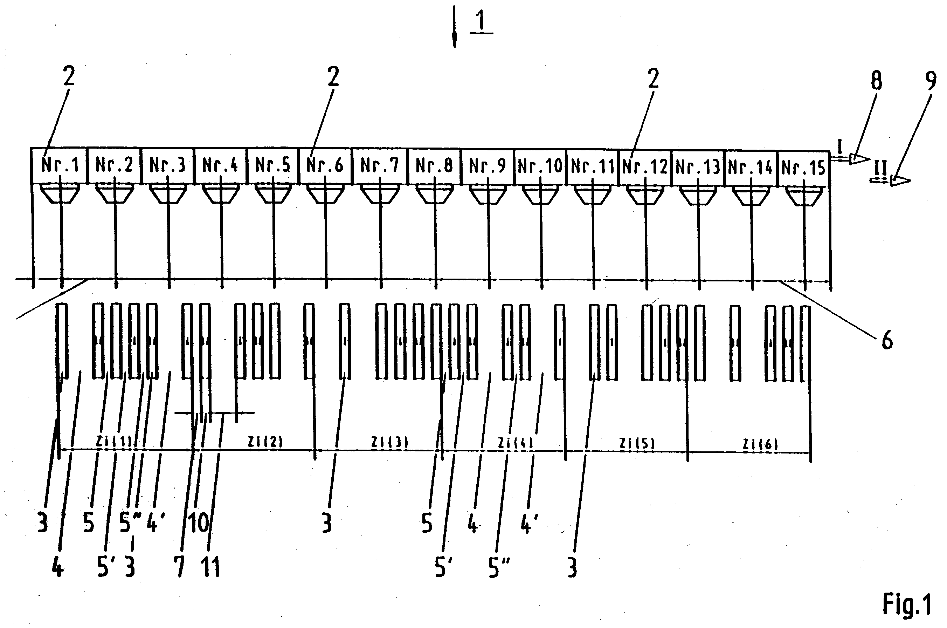

Figur 1 zeigt das Signierschema der erfindungsgemäßen Bardoce-Signieranlage. Herzstück dieser Anlage ist der Signierblock 1, der hier beispielsweise aus 15 aneinandergereihter einzeln ansteuerbarer Spritzpistolen 2 besteht. Jede Spritzpistole 2 trägt einen etwa 5 mm breiten Farbring 3 auf das zu identifizierte Stück auf. Bei diesem Ausführungsbeispiel besteht der Barcode aus einer sechsstelligen Zahl-Ziffern (1-6)-, wobei ein 2 aus 5 Code benutzt wird. Dies bedeutet, daß jede Ziffer aus einer Abfolge von zwei breiten Strichen 4,4'und drei schmalen Strichen 5,5',5'' besteht. In diesem Zusammenhang sei noch einmal betont, daß nicht der eigentliche Code, sondern die Lücken dazwischen aufgespritzt werden. Die zwischen den Lücken verbleibenden Oberflächenteile des zu identifizierenden Stückes stellen den eigentlichen Code dar.

Damit die Spritzkegel zweier benachbarter Spritzpistolen 2 sich nicht vermischen können, ist ein Mindestabstand 6 zwischen den Spritzpistolen 2 erforderlich. Da der Abstand 7 zwischen zwei Farbringen 3 aber geringer ist als der Abstand 6 der Spritzpistolen 2 ist zum Aufspritzen eine axiale Verschiebung des Signierblockes 1 erforderlich. Bei der ersten Spritzabfolge werden die hier gezeigten Farbringe 3 ohne eine römische Ziffer aufgespritzt. Dazu werden die Spritzpistolen mit der Nummer 1,2,5,7,8,11,12,13 und 15 angesteuert. Bei axial stillstehendem Stück wird der Signierblock 1 um einen festgelegten Weg 8 nach rechts verschoben. Danach erfolgt die Aufspritzung der Farbringe 3, die mit einer Ziffer I gekennzeichnet sind. Dazu werden die Spritzpistolen 2 mit der Nummer 2,3,4,6,7,8,9,10,11,12 und 14 angesteuert. Nach einer zweiten axialen Verschiebung des Signierblockes 1 um den gleichen Betrag 9 nach rechts erfolgt die Anspritzung der Farbringe 3, die mit der Ziffer II gekennzeichnet sind. Dazu werden die Spritzpistolen Nr. 1,2,3,4,5,7,8,9,12,13 und 14 angesteuert. Dies bedeutet, daß bei der hier gewählten Abfolge bei der ersten Spritzabfolge insgesamt neun Spritzpistolen 2 bei der zweiten und dritten Abfolge je elf Spritzpistolen 2 angesteuert werden. Nach Abschluß der dritten Spritzabfolge wird der Signierblock 1 wieder in die Ausgangsstellung zurückgefahren.

Die Breite 10 jedes aufgebrachten Farbringes 3 beträgt vorzugsweise 5 mm. Es sind aber auch schmalere Farbringe von etwa 3.5 mm und selbstverständlich auch breitere aufspritzbar. Die Breite 11 des breiten Streifens 4,4'des Code ist etwa dreimal so groß wie die Breite 7 des schmalen Streifens 5 bzw. 5' bzw. 5''. Dieses Verhältnis hat sich als günstig im Hinblick auf eine unverwechselbare Identifizierung erwiesen.

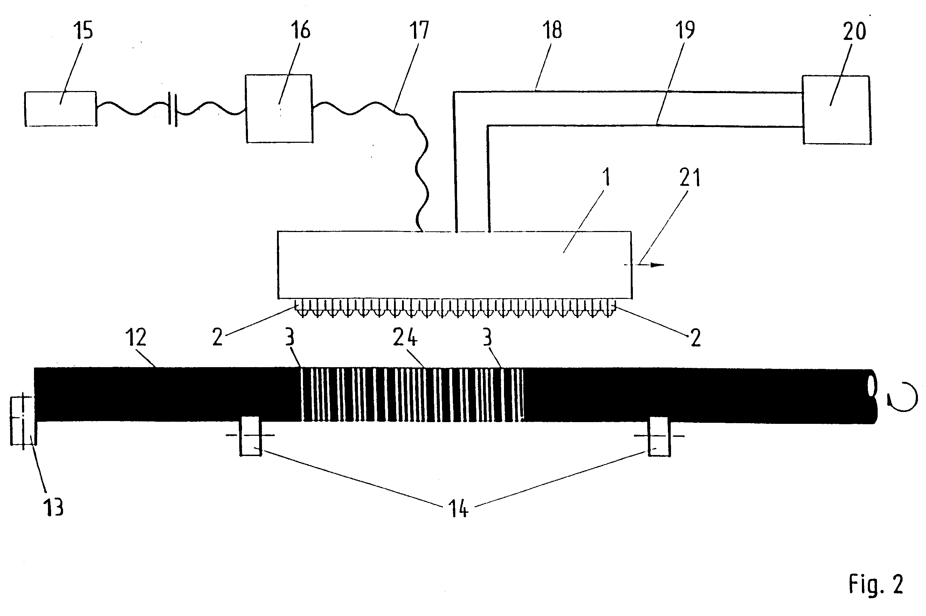

Figur 2 zeigt als Prinzipbild die erfindungsgemäße Barcode-Signieranlage. In dieser Darstellung sind auf dem Signierblock 1 insgesamt einundzwanzig Spritzpistolen 2 angebracht. Damit kann, falls erforderlich, ein Barcode 24 mit einer siebenstelligen oder sogar achtstelligen Ziffernfolge aufgespritzt werden. An dem in Figur 1 erläuterten Signierschema ändert sich dadurch nichts. Das zu identizifierte Stück, hier beispielsweise ein Rohr 12, wird gegen eine einschwenkbare Anlaufrolle 13 in die Signieranlage eingefahren. Damit der einzelne Farbring 3 über den gesamten Umfang aufgespritzt werden kann, ist das Rohr 12 auf einer Drehvorrichtung 14 gelagert. Von einem Zentralrechner 15 aus wird der Steuerungsrechner 16 der Signieranlage angesteuert, der wiederum über ein Kabel 17 mit dem Signierblock 1 verbunden ist. Die Zufuhr der Signierfarbe zu den einzelnen Spritzpistolen 2 erfolgt über Zuleitungen 18,19, die mit einer Farbaufbereitungseinheit 20 verbunden sind.

Die axiale Verschiebung des Signierblockes 1 ist mit einem Pfeil 21 gekennzeichnet. Die Anlaufrolle 13 sorgt dafür, daß das Rohr 12 während des Aufspritzens axial nicht wandern kann.

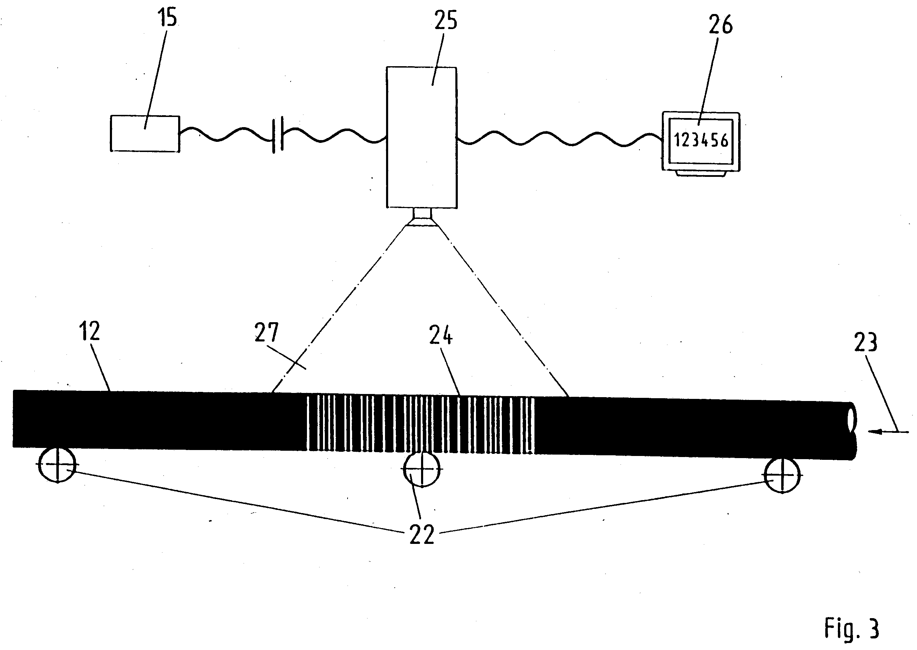

Figur 3 zeigt das Erfassungssystem des aufgespritzten Barcode 24. Das zu identifizierende Rohr 12 bewegt sich über Rollen 22 eines Transportrollganges in den Bereich des Erfassungssystems. In diesem Beispiel bewegt sich das Rohr 12 von rechts nach links, wie durch den Pfeil 23 angedeutet. Es kann sich aber ebenso von links nach rechts bewegen, da dies für die Erfassung nicht relevant ist. Die Transportgeschwindigkeit des Rohres 12 darf dabei bis zu 2 m pro Sekunde betragen, ohne daß die Erfassungsgenauigkeit dadurch beeinträchtigt wird. Im Erfassungsbereich ist fest eine Videozeilenkamera 25 installiert, unter der das Rohr 12 bewegt wird. Verbunden ist die Videokamera 25 mit dem Zentralrechner 15 und einem Bildauswertesystem 26. Der Erfassungswinkel 27 der Videokamera 25 ist so ausgelegt, daß der Barcode 24 über seine ganze Breite erfaßt werden kann.

## Patentansprüche

1. Verfahren zur Einzelstückverfolgung, bei dem das einzelne Stück Träger einer unverwechselbaren Identifizierung in Form eines Barcodes ist und beim Durchlaufen aller vorgeschriebenen Fertigungs- und Prüfschnitte bei den einzelnen Stationen die Identifizierung des individuellen Stückes aufgenommen und die erfaßte Identifizierung mit der Vielzahl aller vorab eingegebenen Identifizierungen abgeglichen und der durchgeführte Fertigungs- oder Prüfschritt der erfaßten Identifizierung zugeordnet wird,
dadurch gekennzeichnet,
daß zu Beginn der Fertigung auf jedes einzelne Rohr unmittelbar ein über den gesamten Querumfang sich erstreckender Barcode versatzfrei aufgegeben wird, der im Zulaufbereich zu den einzeinen Fertigungs-bzw. Prüfstationen während des Weitertransportes unabhängig von der Transportrichtung automatisch als Videobild abgelesen wird und die Lücken des Barcodes bei axial fixiertem, aber sich drehendem Stück aufgespritzt wird, wobei die Breite des einzelnen Farbstriches konstant ist.

2. Verfahren nach Anspruch 1,
dadurch gekennzeichnet,
daß eine weißpigmentierte Signierfarbe aufgespritzt wird.

3. Verfahren nach Anspruch 2,
dadurch gekennzeichnet,
daß die Breite des Farbstriches mindestens 3,5 mm, vorzugsweise 5 mm, beträgt.

4. Verfahren nach einem der Ansprüche 2 oder 3,
dadurch gekennzeichnet,
daß bis zu 15 Farbringe gleichzeitig aufgespritzt werden.

5. Verfahren nach Anspruch 4,
dadurch gekennzeichnet,
daß in einer Richtung axial versetzt zu den schon aufgespritzten Farbringen zeitlich nacheinander weitere Farbringe aufgespritzt werden.

6. Verfahren nach den Ansprüchen 2 bist 5,
dadurch gekennzeichnet,
daß im Querschnitt gesehen der einzelne Farbring von der Mitte zu den Rändern eine abnehmende Dicke aufweist.

7. Verfahren nach Anspruch 6,
dadurch gekennzeichnet,
daß die größte Querschnittsdicke des Farbringes ≦ 20 µm beträgt.
